# EUROPEAN PATENT SPECIFICATION

(11) **EP 1 905 671 B1**
(45) Date of publication and mention of the grant of the patent: **29.09.2010**
(21) Application number: 06781010.1
(22) Date of filing: 12.07.2006
(51) Int. Cl.: B62D 6/00, B62D 5/04, B62D 101/00, B62D 109/00, B62D 111/00, B62D 113/00, B62D 119/00

(54) **STEERING APPARATUS FOR VEHICLE**
LENKVORRICHTUNG FÜR EIN FAHRZEUG
DISPOSITIF DE DIRECTION DE VÉHICULE

(30) Priority: 20.07.2005 JP 2005210592
(43) Date of publication of application: 02.04.2008
(73) Proprietor: JTEKT Corporation, Osaka-shi Osaka 542-8502 (JP)
(72) Inventor: ITO, Tadao c/o FUJI KIKO Co., Ltd., Shizuoka 431-0431 (JP); OSANAI, Akira c/o FUJI KIKO Co., Ltd., Shizuoka 431-0431 (JP); HIGASHI, Kenji c/o JTEKT Corporation, Osaka 542-8502 (JP)
(74) Representative: Grünecker, Kinkeldey, Stockmair & Schwanhäusser Anwaltssozietät
(86) International application number: PCT/JP2006/313840
(87) International publication number: WO 2007/010790

(56) References cited:
- WO-A-2004/065195
- DE-A1- 19 841 913
- JP-A- 10 211 885
- JP-A- 2001 213 332
- JP-A- 2001 301 639
- JP-A- 2001 341 655
- JP-A- 2002 120 737
- JP-A- 2002 127 919
- JP-A- 2002 225 733
- JP-A- 2002 518 252
- JP-A- 2003 146 230
- JP-A- 2003 170 843
- JP-A- 2004 237 785
- JP-A- 2004 351 975
- JP-A- 2005 008 037
- JP-A- 2005 096 559
- JP-A- 2005 132 327
- JP-U- 06 022 151

## Description

The present invention relates to a steering apparatus for a vehicle according to the preamble of independent claim 1.

A conventional steering apparatus with a steer-by-wire (SBW) system is disclosed in JP 2002-225733. This steering apparatus includes: a steering wheel operated by a driver; a steering angle sensor for detecting a steered amount of the steering wheel as an electric signal; a steering mechanism capable of changing a steer angle of road wheels; a connecting mechanism capable of mechanically connecting the steering wheel and the steering mechanism; and an SBW control unit for controlling a steering motor of the steering mechanism based on the electric signal detected by the steering angle sensor under an SBW mode. The SBW control unit sets the connecting mechanism in a connected state when the steering motor has failed to enable changing the steer angle of the road wheels mechanically.

The connecting mechanism is composed of an electromagnetic clutch, a friction clutch, a positive clutch, or the like. The SBW control unit controls a drive circuit of the connecting mechanism based on a command signal to switch the connecting mechanism between a disconnected state and the connected state.

In the above-described configuration, the SBW control unit sets the connecting mechanism in the disconnected state in normal state to disconnect a mechanical connection between the steering wheel and the steering mechanism. Then, the SBW control unit drives the steering mechanism according to an electric variable detected by the steering angle sensor to steer the road wheels (not shown) when the steering wheel is steered.

When it is determined that the steering motor or the like have failed, the SBW control unit outputs the command signal to the drive circuit of the connecting mechanism in order to switch the connecting mechanism from the disconnected state to the connected state and to stop controlling the steering mechanism based on the electric variable detected by the steering angle sensor. As a result, steering force onto the steering wheel is conducted to the steering mechanism through the connecting mechanism and the road wheels (not shown) are steered by the steering mechanism.

As described above, in the conventional steering apparatus with the SBW system, it is possible to steer the road wheels by a backup system with a mechanical connecting mechanism when the system has failed.
A steer-by-wire system according to the preamble of claim 1 is described in DE 198 41 913 A1, wherein a clutch is normally closed to connect an upper part of a steering shaft with a lower part. When the engine is switched on and no malfunction has been detected the clutch is set into a disconnecting state in which no mechanical connection exists any longer and the vehicle is in a steer-by-wire modus.

The above-described conventional steering apparatus has a configuration, in which the SBW control unit outputs the command signal to the drive circuit of the connecting mechanism to change the state of the connecting mechanism. Therefore, a system, in which the SBW control unit can activate the backup system reliably even when electrical supply to the S3W control unit has stopped for some reason, is not established.

Consequently, the present invention has been made in order to solve the above-described problem. It is an object of the present invention to provide a steering apparatus for a vehicle, which can activate a backup system reliably even when an SBW system has failed.
The above objective is inventively solved by the features of the independent claim 1. A steering apparatus for a vehicle is capable of executing a steer-by-wire mode in which road wheels are steered by a steering mechanism mechanically disconnected with a steering device. The steering apparatus of the present invention comprises a connecting mechanism which mechanically connects the steering device and the steering mechanism and a steer-by-wire control unit. The steer-by-wire control unit sets the connecting mechanism to a disconnected state to control the steering mechanism based on an operating amount of the steering device under the steer-by-wire mode, and sets the connecting mechanism to a connected state to switch a steering mode from the steer-by-wire mode to a steer-by-wire backup mode when it has been determined that the steer-by-wire mode cannot be executed properly. The connecting mechanism is set to the disconnected state while being energized and set to the connected stare while being non-energized. The steer-by-wire control unit checks whether or not the steer-br-wire mode can be executed properly at start of engine
and always during operation of engine, wherein the steer-by-wire control unit shuts off electric power to itself to stop energizing the connecting mechanism when it has been determined that the steer-by-wire mode cannot be executed properly.
According to the present invention, since the connecting mechanism is set to the connected state while being non-energized, the connecting mechanism can be set to the connected state and a backup system can be activated unfailingly when the electrical supply to the steer-by-wire control unit is stopped. In addition, since whether or not the steer-by-wire mode can be executed properly is checked at start of engine and during operation of engine, the backup system can be activated unfailingly even when the system is out of order.

The steer-by-wire control unit does not execute an abnormal control while the backup system by the connecting mechanism is activated because the electric power is not supplied to the steer-by-wire control unit.

A case where the steer-by-wire mode cannot be executed properly includes a steer-by-wire system malfunction and an electronic component system malfunction. Therefore, since the backup system can be activated even when the electronic component system malfunctions, emergency escape running can be obtained by steering operation under mechanical connection between the steering device and the steering mechanism.

Alternatively, it is preferable that the steer-by-wire control unit checks whether or not the steer-by-wire mode can be executed properly under the disconnected state of the connecting mechanism by energizing when an electrical supply to the vehicle is started at start of engine, continues energizing the connecting mechanism to keep the disconnected state of the connecting mechanism when it has been determined that the steer-by-wire mode can be executed properly, and stops energizing the connecting mechanism to set the connecting mechanism to the connected state when it has been determined that the steer-by-wire mode cannot be executed properly. According to this, the steer-by-wire control unit can activate the steer-by-wire system immediately without any waiting time when it has been determined that the steer-by-wire mode can be executed properly with start of engine selected.

[Fig. 1] Fig. 1 is an overall schematic configuration diagram of an embodiment of a steering apparatus of the present invention.
[Fig. 2] Fig. 2 is a cross-sectional view of a main portion of an electromagnetic clutch in the embodiment of the present invention.
[Fig. 3] Fig. 3 is a cross-sectional view along a line III - III in Fig. 2 in the embodiment of the present invention.
[Fig. 4] Fig. 4 is a flowchart showing processes at engine start-up in the embodiment of the present invention.
[Fig. 5] Fig. 5 is a flowchart showing processes during operation of engine in the embodiment of the present invention.
[Fig. 6] Fig. 6 is a table showing states of an SBW system and an SBW backup system in the embodiment of the present invention.

A description will be made below of an embodiment of the present invention based on the drawings.

As shown in Fag. 1, a steering apparatus for a vehicle 1 included: [a] a steering wheel (steeping device) 2 operated by a driver; [b] a steering angle sensor 3 for detecting an operating amount of the steering wheel 2 as an electric signal; [c] a torque sensor 4 for detecting torque of the steering wheel 2; [d] a steering reaction force generator 5 for generating reaction force to the steering wheel 2; [e] a steering mechanism 6 for changing a steering angle of road wheels 10; [f] an electromagnetic clutch (connecting mechanism) 8 for connecting the steering wheel 2 and the steering mechanism 6 mechanically with a wire 7; [g] an SBW control unit 9 for receiving a vehicle speed (V) signal, a yaw rate (ω) signal, a lateral acceleration (G) signal or the like as an in-vehicle LAN signal as well as a torque signal and a steering angle signal mentioned above; and [h] a battery 30 for supplying electric power to the above-described components.

In a connected state of the electromagnetic clutch 8, the electromagnetic clutch 8 conducts the operating amount of the steering wheel 2 to the wire 7 and the steering mechanism 6 steers the road wheels 10 based on the operating amount mechanically inputted thereto. The electromagnetic clutch 8 is controlled by the SBW control unit 9. The electromagnetic clutch 8 is set in a disconnected state while it is energized or set in the connected state while it is not energized.

During an SBW mode in which the electromagnetic clutch 8 is in the disconnected state, the SBW control unit 9 controls the steering mechanism 6 based on the steering angle signal from the steering angle sensor 3 to steer the road wheels 10 by a steering actuator (not shown) provided in the steering mechanism 6 according to the operating amount of the steering wheel 2. In addition, the SBW control unit 9 controls the steering reaction force generator 5 based on the torque signal from the torque sensor 4 and so on to enable an operation of the steering wheels 2 with appropriate torque. Furthermore, the SBW control unit 9 shifts to an SBW backup mode to switch the electromagnetic clutch 8 from the disconnected state to the connected state when the SBW control unit 9 has determined that the SBW mode cannot be executed properly due to a system malfunction of electrical equipment, an SBW system or the like.

In other words, the steering apparatus is provided with the SBW system for executing the SBW mode and the SBW backup system for executing the SBW backup mode.

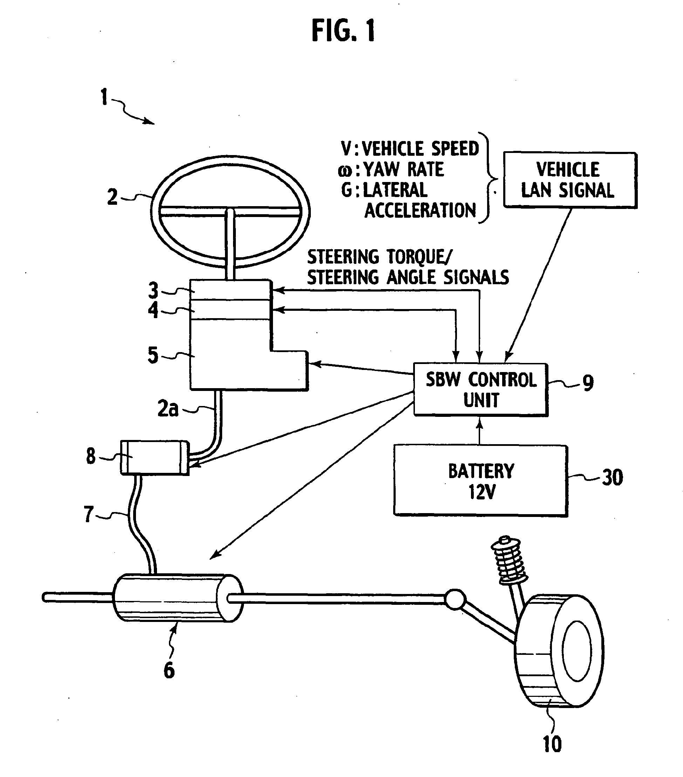

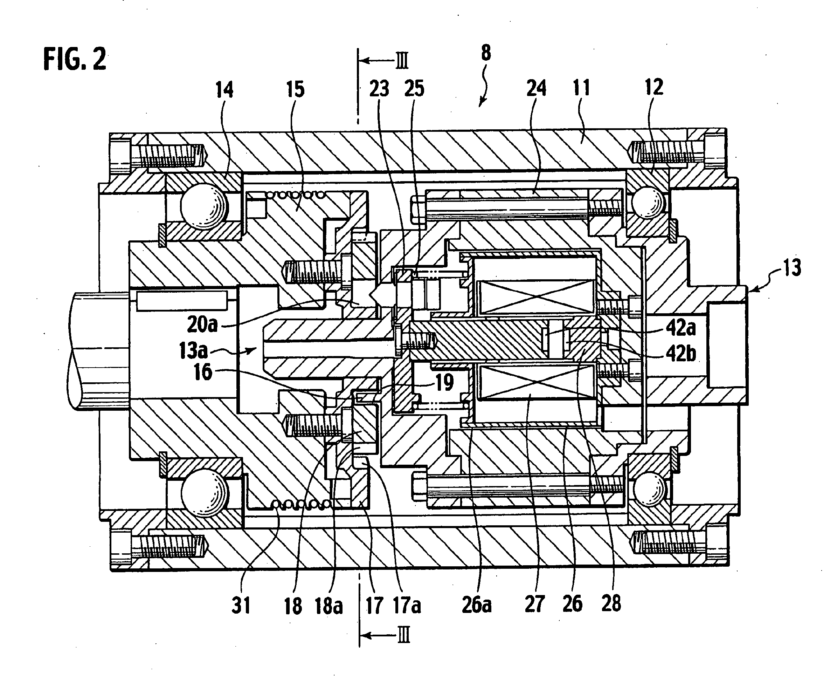

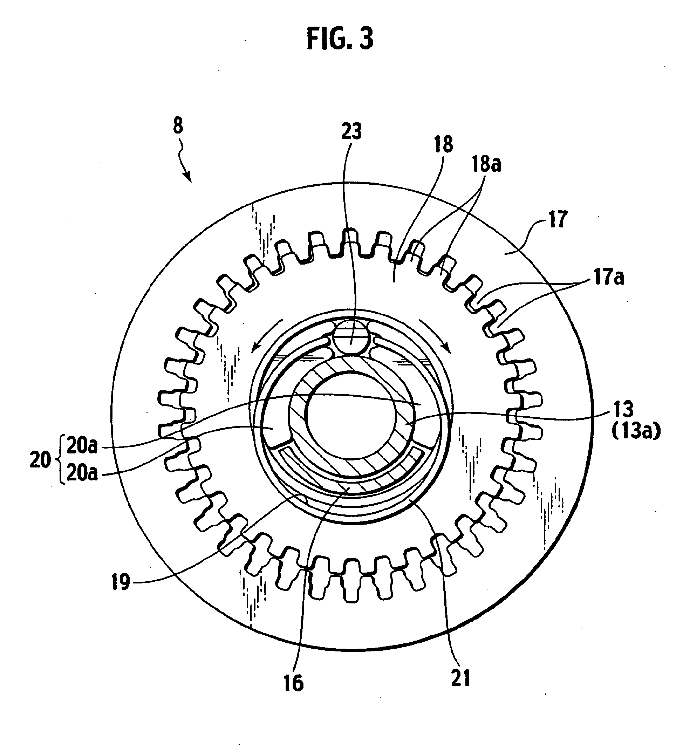

Next, a configuration of the electromagnetic clutch 8 will be described in detail. As shown in Fig. 2 and Fig. 3, the electromagnetic clutch 8 includes: a shaft 13 supported rotatably in a housing 11 via a bearing 12 interposed therebetween and connected with an output shaft 2a (shown in Fig. 1) on the steering wheel 2 side; and an output pulley 15 supported rotatably and coaxially with the shaft 13 in the housing 11 via a bearing 14 interposed therebetween. An inner wire 31 of the wire 7 connected to the steering mechanism 6 is wound around the output pulley 15 to transmit rotation of an after-mentioned internal gear ring 17 to the steering mechanism 6. A protrusion 13a is provided on one end of the shaft 13 and a circular-arc rotating protrusion 16 is provided around the protrusion 13a.

The internal gear ring 17 is fixed to the output pulley 15 with opposing to the shaft 13 and supported rotatably around a center axis of the shaft 13. Internal teeth 17a are provided on an inner circumference of the internal gear ring 17. An external gear ring 18 has a center hole 19 penetrated by the protrusion 13a of the shaft 13 and is disposed between the shaft 13 and the internal teeth 17a of the internal gear ring 17. External teeth 18a are provided on an outer circumferential surface of the external gear ring 18. The center hole 19 is formed to be larger than an outer diameter of the protrusion 13a of the shaft 13. The external gear ring 18 is eccentrically located with respect to the internal gear ring 17 so that the external teeth 18a can be intermeshed with the internal teeth 17a.

As shown in detail in Fig. 3, lock members 20 are disposed within a space between the outer circumference of the shaft 13 and the external gear ring 18, and eccentrically-located to make the external gear teeth 18a of the external ring 18 intermeshed with the internal teeth 17a. The lock members 20 are composed of a pair of lock pieces 20a and one end of each of the lock pieces 20a extends close to the rotating protrusion 16. It is an unlocked state that a spool 23 is not projected between the pair of lock pieces 20a and the pair of lock pieces 20a is contacted each other. Otherwise, as shown in Fig. 3, it is a locked state that the spool 23 is projected between the pair of lock pieces 20a and the pair of lock pieces 20a is separated each other.

At an unlock position, since each of the lock pieces 20a is not wedged between the external gear ring 18 and the protrusion 13a, the pair of lock pieces 20a are rotated by being pushed by the rotating protrusion 16 in sliding contact with the external gear ring 18 when the shaft 13 rotates. In this case, the external gear ring 18 is rotated with intermeshed with the internal gear ring 17 by 20a. At a lock position, each of the lock pieces 20a is wedged between the external gear ring 18 and the protrusion 13a. Furthermore, since the external teeth 18a are inte'rmeshed with the internal teeth 17a, the pair of lock pieces 20a restrains the external gear ring 18 from moving in a radial direction to make the distance between the outer circumference of the protrusion 13a of the shaft 13 and the external teeth 18a of the external gear ring 18 constant. As a result, the pair of lock pieces 20a and the external gear ring 18 rotate integrally to rotate the output pulley 15 via the internal gear ring 17 by intermeshing of the gear rings when the shaft 13 rotates.

Note that, a ring spring 21 is provided between the pair of lock pieces 20a. The pair of lock pieces 20a are urged to the lock position to be spaced away each other by spring force of the ring spring 21. However, the spring force is so small that one of the lock pieces 20a can be moved to the unlock position by pressing force from the rotating protrusion 16. Specifically, the ring spring 21 only prevents the pair of lock pieces 20a from rattling.

As shown in Fig. 2 and Fig. 3, the spool 23 is provided on the shaft 13 and is disposed on a rotation orbit of the pair of lock pieces 20a and between the pair of lock pieces 20a. Since the shaft 13 and the pair of lock pieces 20a are always synchronized to rotate each other, a relative position between the spool 23 and the pair of lock pieces 20a is not changed. In addition, the spool 23 is provided to be able to projected-into and retracted-from a space between the pair of lock pieces 20a by turning on/off an electromagnetic solenoid 24. A tip end of the spool 23 is tapered off to a point and able to projected into the space between the pair of lock pieces 20a smoothly and surely.

The electromagnetic solenoid 24 has a spring 25 for urging the spool 23 to the lock position and an electromagnet 26 for projecting the spool 23 to the unlock position by electromagnetic force. The electromagnet 26 is composed of an electromagnetic coil 27 and an iron core 28.

The electromagnetic solenoid 24 is turned on by energization of the electromagnetic coil 27 to retract the spool 23 to the unlock position by the electromagnet 26. The pair of lock pieces 20a rotates together with contacted each other by the rotating protrusion 16 when the shaft 13 is rotated (the spring force of the ring spring 21 is so small that the pair of lock pieces 20a is easily contacted each other by the rotating protrusion 16). The external gear ring 18 rotates with displacing its meshing position with the internal gear ring 17 by the pair of lock pieces 20a rotating together with the shaft 13. At this time, the pair of lock pieces 20a and the external gear ring 18 slip each other. Therefore, the electromagnetic clutch 8 is set to the disconnected state while the electromagnetic solenoid 24 is energized.

The electromagnetic solenoid 24 is turned off by non-energization of the electromagnetic coil 27 to project the spool 23 to the lock position by the spring force of the spring 25. Since the pair of lock pieces 20a is positioned at the lock position after the spool 23 has been positioned at the lock position, the pair of lock pieces 20a is wedged between the protrusion 13a and the external gear ring 18. And then, the external gear ring 18 and the shaft 13 rotate integrally. At this time, since the external gear ring 18 and the internal gear ring 17 are already intermeshed each other, each of the external gear ring 18 and the internal gear ring 17 rotate immediately together with the rotation of the shaft 13. As a result, the steering force onto the steering wheel 2 is conducted to the steering mechanism 6 via the electromagnetic clutch 8 and the wire 7. Therefore, the electromagnetic clutch 8 is set to the connected state while the electromagnetic solenoid 24 is not energized.

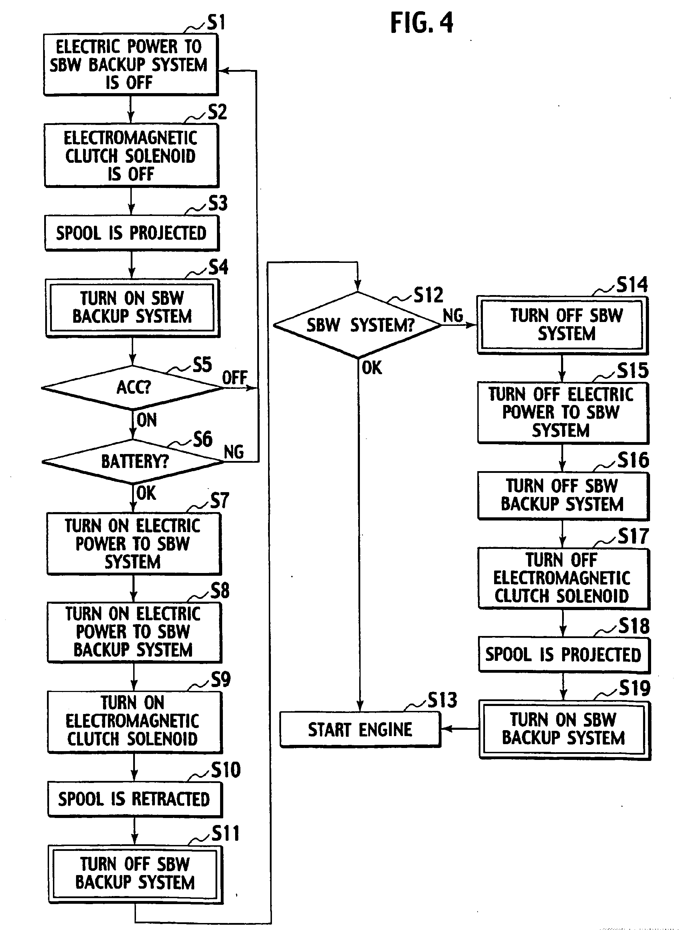

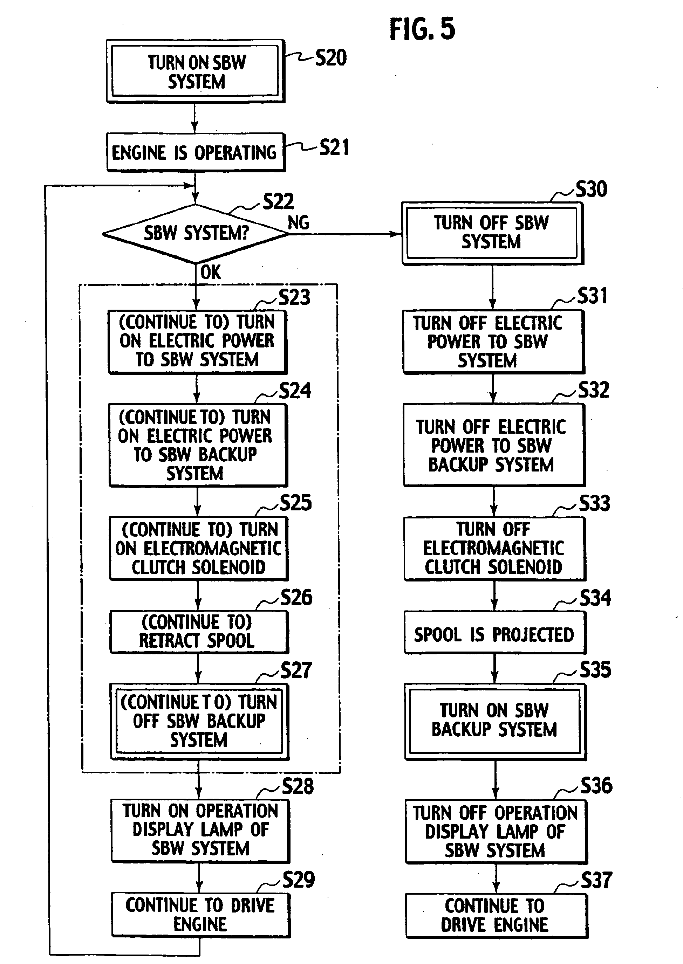

Next, functions of the above-described steering apparatus 1 will be described based on Fig. 4 and Fig. 5. As shown in Fig. 4, since electrical supply to the SBW backup system is shut off when an engine is stopped, the electromagnetic solenoid 24 of the electromagnetic clutch 8 is turned off and the spool 23 is projected to the lock position. In such a way, the SBW backup system is turned on (Steps S1 to S4).

Since electric power is supplied from the battery 30 to the SBW system and the SBW backup system when ACC (accessory) is selected, the electromagnetic solenoid 24 of the electromagnetic clutch 8 is turned on and the spool 23 is retracted at the unlock position. In such a way, the SBW backup system is turned off (Steps S5 to S11).

Next, the SBW control unit 9 determines whether or not the SBW system is to be able to be executed properly (Step S12). Whether or not the SBW system can be executed properly is determined by checking malfunction in the SBW system and the electronic component system. In checking the SBW system malfunction, for example, the SBW control unit 9 accesses the steering angle sensor 3, the torque sensor 4 and the steering mechanism 6 to get various information. And then, the SBW control unit 9 checks whether or not there is a mismatch between information on the steering wheel 2 and information on the wheels 10. Then, the SBW control unit 9 determines that the SBW system malfunction occurs when the mismatch is found. The SBW control unit 9 determines that the SBW system malfunction occurs also when an electric power voltage of the battery 30 is equal to or less than a prescribed level.

If it has been determined that the SBW control unit 9 can execute the SBW system properly, start of engine is allowed (Step S13). Specifically, if it has been determined that the SBW system can be executed properly, the SBW control unit 9 selects the SBW mode to disconnect the electromagnetic clutch 8 by the energization of the electromagnetic coil 27. The mechanical disconnection between the steering wheel 2 and the steering mechanism 6 is kept. Then, the SBW control unit 9 drives the steering mechanism 6 according to the electric variable detected by the steering angle sensor 3 to steer the road wheels 10 when the steering wheel 2 is steered.

If it has been determined that the SBW control unit 9 cannot execute the SBW system properly, the SBW system is turned off. Specifically, the SBW control unit 9 shuts off the electrical supply to the SBW system and the SBW backup system. As a result, the electromagnetic solenoid 24 of the electromagnetic clutch 8 is turned off and the spool 23 is projected to the lock position to turn on the SBW backup system (Steps S14 to S19). And then, start of engine is allowed (Step S12). Specifically, if it has been determined that the SBW system cannot be executed properly, the SBW control unit 9 shifts to the SBW backup mode. Then, the electromagnetic clutch 8 is switched from the disconnected state to the connected state by the non-energization of the electromagnetic coil 27. Then, the steering force onto the steering wheel 2 is conducted to the steering mechanism 6 via the electromagnetic clutch 8 to steer the road wheels 10 by the steering mechanism 6.

As shown in Fig. 5, the SBW control unit 9 always checks whether or not the SBW system is being able to be executed properly during operation of engine after the SBW system was turned on at start of engine (Steps S20 to S22).

If it has been determined that the SBW system can be executed properly, the SBW control unit 9 continues the SBW mode. Specifically, the SBW control unit 9 continues to supply the electric power to the SBW system and the SBW backup system. Then, the electromagnetic solenoid 24 of the electromagnetic clutch 8 is kept turned on by continuing the energization of the electromagnetic coil 27 and the spool 23 is kept retracted at the unlock position. In such a way, the SBW backup system is kept turned off (Steps S23 to S27). An operation lamp of the SBW system is turned on under the SBW mode and operation of engine is continued (Steps S28 and S29).

If it has been determined that the SBW system cannot be executed properly, the SBW control unit 9 turns off the SBW system. Specifically, the SBW control unit 9 shuts off the electrical supply to the SBW system and the SBW backup system. As a result, the electromagnetic solenoid 24 of the electromagnetic clutch 8 is turned off and the spool 23 is projected to the lock position to turn on the SBW backup system (Steps S30 to S35). The operation lamp of the SBW system is turned off under the SBW backup mode and operation of engine is continued (Steps S36 and S37).

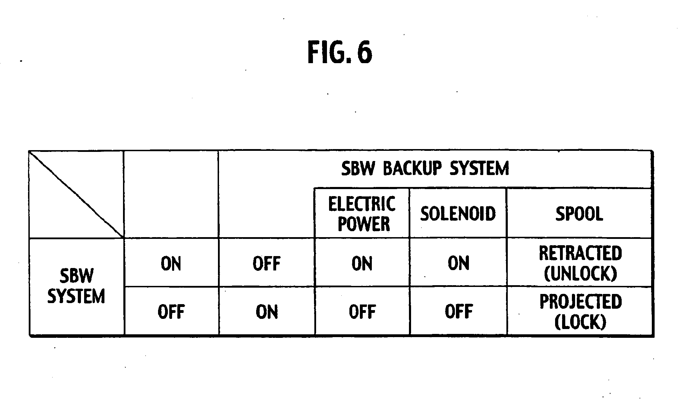

Basically, as shown in Fig. 6, the SBW backup system is turned off when the SBW system is turned on and the SBW backup system is turned on when the SBW system is turned off.

According to the steering apparatus 1 described above, since the electromagnetic clutch 8 is set to the connected state during the non-energization, the electromagnetic clutch 8 can be set to the connected state and the SBW backup system can be activated unfailingly when the electrical supply to the SBW control unit 9 is stopped. In addition, since whether or not the SBW mode can be executed properly is checked at start of engine and during operation of engine, the backup system can be activated unfailingly even when the system is out of order.

In the present embodiment, if it has been determined that the SBW mode cannot be executed properly, the energization of the electromagnetic clutch 8 is stopped by turning off the electric power to the SBW control unit 9 itself. Therefore, the SBW control unit 9 does not execute an abnormal control while the backup system by the electromagnetic clutch 8 is activated because the electric power is not supplied to the SBW control unit 9. In other words, the reaction force application to the steering wheel 2 by the steering reaction force generator 5 based on the torque sensor 4, which must be executed under the SBW mode, can be prevented unfailingly under the SBW backup mode.

In the present embodiment, since the case where the SBW mode cannot be executed properly includes the malfunction in the SBW system and the electronic component system, the SBW backup system is activated even when the electronic component system malfunction occurs. Therefore, emergency escape running can be obtained by steering operation under mechanical connection.

In the present embodiment, the SBW control unit 9 checks whether or not the SBW mode can be executed properly under the disconnected state of the electromagnetic clutch 8 by the energization when an electrical supply to the vehicle is started at start of engine. If it has been determined that the SBW mode can be executed properly, the SBW control unit 9 continues the energization of the electromagnetic clutch 8 to keep the disconnected state of the electromagnetic clutch 8. If it has been determined that the SBW mode cannot be executed properly, the SBW control unit 9 stops the energization of the electromagnetic clutch 8 to set the electromagnetic clutch 8 to the connected state. Therefore, if it has been determined that the SBW mode can be executed properly when start of engine is selected, the SBW control unit 9 can activate the SBW system immediately without any waiting time.

Note that, in the present embodiment, the connecting mechanism is composed of the electromagnetic clutch 8. However, the connecting mechanism is not limited to this.

### INDUSTRIAL APPLICABILITY

According to the steering apparatus for a vehicle of the present invention, the connecting mechanism is set to the connected state by the non-energization. Therefore, when the electrical supply to the steer-by-wire control unit is stopped, the connecting mechanism can be set to the connected state unfailingly to activate the backup system.

## Claims

1. A steering apparatus for a vehicle capable of executing a steer-by-wire mode in which road wheels 10 are steered by a steering mechanism 6 mechanically disconnected with a steering device 2, the apparatus comprising:
a connecting mechanism 8 which mechanically connects the steering device 2 and the steering mechanism; and
a steer-by-wire control unit 9 which
sets the connecting mechanism 8 to a disconnected state to control the steering mechanism 6 based on an operating amount of the steering device under the steer-by-wire mode, and
sets the connecting mechanism 8 to a connected state to switch a steering mode from the steer-by-wire mode to a steer-by-wire backup mode when it has been determined that the steer-by-wire mode cannot be executed properly,wherein the connecting mechanism 8 is set to the disconnected state while being energized and set to the connected state while being non-energized, and
the steer-by-wire control unit 9 checks whether or not the steer-by-wire mode can be executed properly at start of engine and always during operation of engine,
**characterized in that**
the steer-by-wire control unit 9 shuts off electric power to itself to stop energizing the connecting mechanism 8 when it has been determined that the steer-by-wire mode cannot be executed properly.

2. The steering apparatus according to claim 1, wherein
a case where the steer-by-wire mode cannot be executed properly includes a steer-by-wire system malfunction and an electronic component system malfunction.

3. The steering apparatus according to claim 1 or 2, wherein
the steer-by-wire control unit
checks whether or not the steer-by-wire mode can be executed properly under the disconnected state of the connecting mechanism 8 by energizing when an electrical supply to the vehicle is started at start of engine,
continues energizing the connecting mechanism 8 to keep the disconnected state of the connecting mechanism 8 when it has been determined that the steer-by-wire mode can be executed properly, and
stops energizing the connecting mechanism 8 to set the connecting mechanism 8 to the connected state when it has been determined that the steer-by-wire mode cannot be executed properly.

## Patentansprüche

1. Eine Lenkeinrichtung für ein Fahrzeug, fähig einen Steer-By-Wire-Betrieb auszuführen, in dem Räder (10) durch einen Lenkmechanismus (6) gelenkt werden, der mechanisch von einer Lenkvorrichtung (2) entgekoppelt ist, wobei die Lenkeinrichtung folgendes aufweist: einen Verbindungsmechanismus (8), der mechanisch die Lenkvorrichtung (2) und den Lenkmechanismus (6) verbindet, und eine Steer-By-Wire-Steuervorrichtung (9), welche den Verbindungsmechanismus (8) in einen entkoppelten Zustand versetzt, um den Lenkmechanismus (6) aufgrund eines Betätigungsgrades der Lenkvorrichtung im Steer-By-Wire-Betrieb zu steuern, und den Verbindungsmechanismus (8) in einen gekoppelten Zustand versetzt, um einen Lenkungsmodus von einem Steer-By-Wire-Betrieb zu einem Steer-By-Wire-Sicherungsbetrieb zu schalten, sobald festgestellt worden ist, dass der Steer-By-Wire-Betrieb nicht ordnungsgemäß ausgeführt werden kann, und den Verbindungsmechanismus (8) in einen entkoppelten Zustand versetzt, während dieser unter Spannung steht, und in einen gekoppelten zustand versetzt wird, während dieser spannungslos ist, und wobei die Steer-By-Wire-Steuervorrichtung (9) überprüft, ob der Steer-By-Wire-Betrieb beim Start des Motors und während des gesamten Betriebs des Motors ordnungsgemäß ausgeführt werden kann oder nicht, **dadurch gekennzeichnet, dass** Steer-By-Wire-Steuervorrichtung (9) die elektrische Energie selbst ausschaltet, um die Spannungszufuhr des Verbindungsmechanismus (8) zu unterbrechen, sobald festgestellt worden ist, dass der Steer-By-Wire-Betrieb nicht ordnungsgemäß ausgeführt werden kann.

2. Die Lenkeinrichtung nach Anspruch 1, wobei eine Betriebsart, in der der Steer-By-Wire-Betrieb nicht ordnungsgemäß ausgeführt werden kann, eine Steer-By-Wire-Systemstörung und eine Elektrokomponentensystemstörung beinhaltet.

3. Die Lenkeinrichtung nach Anspruch 1 oder 2, wobei die Steer-By-Wire-Steuervorrichtung (9) überprüft, ob der Steer-By-Wire-Betrieb im entkoppelten Zustand des Verbindungsmechanismus (8) ordnungsgemäß ausgeführt werden kann oder nicht, wenn dieser unter Spannung steht, sobald eine elektrische Versorgung des Fahrzeugs beim Start des Motors einsetzt,
wobei die Steuervorrichtung (9) mit der Spannungsversorgung des Verbindungsmechanismus (8) fortfährt, um den entkoppelten Zustand des Verbindungsmechanismus (8) aufrechtzuerhalten, sobald festgestellt worden ist, dass der Steer-By-Wire-Betrieb ordnungsgemäß ausgeführt werden kann,
und wobei die Steuervorrichtung (9) die Spannungsversorgung des Verbindungsmechanismus (8) unterbricht, um den Verbindungsmechanismus (8) in einen gekoppelten Zustand zu versetzen, sobald festgestellt worden ist, dass der Steer-By-Wire-Betrieb nicht ordnungsgemäß durchgeführt werden kann.

## Revendications

1. Appareil de direction pour véhicule susceptible d'exécuter un mode de direction par commande électrique dans lequel les roues (10) sont dirigées par un mécanisme de direction (6) mécaniquement déconnecté d'un dispositif de direction (2), l'appareil comprenant :
un mécanisme de connexion (8) qui relie mécaniquement le dispositif de direction (2) et le mécanisme de direction ; et
une unité de commande de direction par commande électrique (9) qui
met le mécanisme de connexion (8) dans un état déconnecté pour commander le mécanisme de direction (6) en se basant sur une quantité de mise en oeuvre du dispositif de direction sous le mode de direction par commande électrique, et
met le mécanisme de connexion (8) dans un état connecté pour commuter un mode de direction du mode de direction par commande électrique à un mode de direction par commande électrique de secours quand il a été déterminé que le mode de direction par commande électrique ne peut pas être exécuté correctement, dans lequel
le mécanisme de connexion (8) est mis dans l'état déconnecté tout en étant excité et mis dans l'état connecté tout en étant non excité, et
l'unité de commande de direction par commande électrique (9) vérifie si vraiment le mode de direction par commande électrique peut être exécuté correctement au démarrage du moteur et constamment pendant le fonctionnement du moteur,
**caractérisé en ce que**
l'unité de commande de direction par commande électrique (9) coupe sa propre énergie électrique pour arrêter d'exciter le mécanisme de connexion (8) quand i a été déterminé que le mode de direction par commande électrique ne peut pas être exécuté correctement.

2. Appareil de direction selon la revendication 1, dans lequel
un cas dans lequel le mode de direction par commande électrique ne peut pas être exécuté correctement inclut une défaillance de système de direction par commande électrique et une défaillance de système de composant électronique.

3. Appareil de direction selon la revendication 1 ou 2, dans lequel
l'unité de commande de direction par commande électrique
vérifie si le mode de direction par commande électrique peut vraiment être exécuté correctement sous l'état déconnecté du mécanisme de connexion (8) par une excitation quand une alimentation électrique du véhicule est déclenchée au démarrage du moteur,
continue d'exciter le mécanisme de connexion (8) pour maintenir l'état déconnecté du mécanisme de connexion (8) quand on a déterminé que le mode de direction par commande électrique peut être exécuté correctement, et
arrête d'exciter le mécanisme de connexion (8) pour mettre le mécanisme de connexion (8) dans l'état connecté quand il a été déterminé que le mode de direction par commande électrique ne peut pas être exécuté correctement.
